# EUROPÄISCHE PATENTSCHRIFT

(11) **EP 3 084 399 B1**
(45) Veröffentlichungstag und Bekanntmachung des Hinweises auf die Patenterteilung: **15.07.2020**
(21) Anmeldenummer: 14820829.1
(22) Anmeldetag: 17.12.2014
(51) Int. Cl.: G02B 21/08, G01N 21/64, G02B 21/00, G01N 21/47

(54) **VORRICHTUNG UND VERFAHREN ZUM UNTERSUCHEN EINER PROBE MITTELS OPTISCHER PROJEKTIONSTOMOGRAFIE**
DEVICE AND METHOD FOR THE EXAMINATION OF A SAMPLE USING OPTICAL PROJECTION TOMOGRAPHY
DISPOSITIF ET PROCÉDÉ D'ANALYSE D'UN ÉCHANTILLON PAR TOMOGRAPHIE OPTIQUE DE PROJECTION

(30) Priorität: 17.12.2013 DE 102013226277
(43) Veröffentlichungstag der Anmeldung: 26.10.2016
(73) Patentinhaber: Leica Microsystems CMS GmbH, 35578 Wetzlar (DE)
(72) Erfinder: KNEBEL, Werner, 76709 Kronau (DE); FOUQUET, Wernher, 68167 Mannheim (DE); SIECKMANN, Frank, 75031 Eppingen (DE)
(74) Vertreter: Bradl, Joachim
(86) Internationale Anmeldenummer: PCT/EP2014/078335
(87) Internationale Veröffentlichungsnummer: WO 2015/091713

(56) Entgegenhaltungen:
- EP-A1- 0 087 574
- EP-A1- 2 587 295
- WO-A2-2012/027542
- DE-A1- 19 632 040
- US-A1- 2008 277 567

## Beschreibung

Die Erfindung betrifft ein Verfahren zum tomografischen Untersuchen einer Probe, bei dem eine Probe mit einem Beleuchtungslichtbündel beleuchtet wird und bei dem ein Transmissionslichtbündel, das das durch die Probe hindurch transmittierte Licht des Beleuchtungslichtbündels beinhaltet, mit einem Transmissionsdetektor detektiert wird.

Die Erfindung betrifft außerdem eine Vorrichtung zum tomografischen Untersuchen einer Probe, mit einer Lichtquelle, die ein Beleuchtungslichtbündel erzeugt, das die zu untersuchende Probe beleuchtet, und mit einem Transmissionsdetektor zum Detektieren eines Transmissionslichtbündels, das durch die Probe hindurch transmittiertes Licht des Beleuchtungslichtbündels beinhaltet.

Aus WO 2012/027542 A2 ist ein Mikroskop bekannt, das gleichzeitig sowohl eine optisch-tomografische Untersuchung, als auch eine SPIM-Untersuchung einer Probe erlaubt. Konkret ist in dieser Druckschrift die optische Projektionstomografie (optical projection tomography: OPT) genannt. Das Mikroskop ist nachteiliger Weise sehr aufwändig aufgebaut, wobei insbesondere gleichzeitig drei präzise zueinander justierte Objektive benötigt werden, um Beleuchtungslicht auf die Probe zu fokussieren und um von der Probe ausgehendes Detektionslicht für die jeweiligen Detektoren zu empfangen. Außerdem ist das Mikroskop nicht flexibel anwendbar. Beispielsweise muss zwingend die Probe relativ zu dem Mikroskop bewegt werden, um dreidimensionale Abbildungen der Probe erzeugen zu können, was auf Grund des durch die drei Objektive eingeschränkten Experimentierraumes umständlich ist und nicht bei jeder Art von Probe möglich ist. Außerdem ist die Realisierung eines solchen Mikroskops in einem klassischen Mikroskopaufbau, insbesondere unter Verwendung eines klassischen Mikroskopstativs nicht oder allenfalls nur umständlich möglich, was die Herstellung eines solchen Mikroskops aufwändig und teuer macht.

In EP0087574 wird eine Vorrichtung offenbart, die die Merkmale des Oberbegriffs des Anspruchs 1 aufweist.

Es ist die Aufgabe der vorliegenden Erfindung, ein Verfahren zum Untersuchen einer Probe mittels optischer Projektionstomografie anzugeben, das mit einem kompakten Aufbau durchführbar ist, das flexibel einsetzbar ist und das dennoch die Möglichkeiten für die simultane Anwendung anderer Untersuchungsmethoden, wie beispielsweise der SPIM-Technik, der konfokalen Beobachtungstechnik oder der Multiphotontechnik, nicht einschränkt.

Die Aufgabe wird durch ein Verfahren wie in Anspruch 10 gelöst.

Es ist die Aufgabe der vorliegenden Erfindung, eine Vorrichtung zum Untersuchen einer Probe mittels optischer Projektionstomografie anzugeben, die einen kompakten Aufbau aufweist, die flexibel einsetzbar ist und die dennoch die Möglichkeit für die simultane Anwendung anderer Untersuchungsmethoden, wie beispielsweise der SPIM-Technik der konfokalen Beobachtungstechnik oder der Multiphotontechnik, bietet.

Diese Aufgabe wird durch eine Vorrichtung wie in Anspruch 1 gelöst.

Die Erfindung hat den Vorteil, dass sie für eine Untersuchung einer Probe mittels optischer Projektionstomografie mit einem einzigen Objektiv auskommt, so dass für die Probe ein wenig eingeschränkter und leicht zugänglicher Experimentierraum zur Verfügung steht.

Außerdem hat die Erfindung den Vorteil, dass die Probe ohne großen Aufwand leicht aus entgegengesetzten Richtungen beleuchtet werden kann, ohne dass die Probe bewegt werden muss. Dieser Vorteil resultiert aus der Tatsache, dass Beleuchtung und Detektion nicht auf unterschiedlichen Seiten der Probenebene stattfinden, so dass, beispielsweise durch einfaches Umschalten mittels einer hinsichtlich des Ablenkwinkels einstellbaren Strahlablenkeinrichtung, der Lichtweg umgekehrt werden kann, was weiter unten im Detail genauer erläutert ist.

Darüber hinaus hat die Erfindung den Vorteil, dass sie in einem klassischen Mikroskopaufbau, insbesondere auch unter Verwendung eines klassischen, aufrechten oder inversen Mikroskopsstativs und/oder in einem Scanmikroskop und/oder konfokalen Scanmikroskop, umsetzbar ist, was sich positiv auf den Aufwand und die Kosten zur Herstellung der erfindungsgemäßen Vorrichtung bzw. der Vielseitigkeit der mit der Vorrichtung verfügbaren Untersuchungsmethoden auswirkt. Ganz allgemein umfasst das Transmissionslichtbündel, das das durch die Probe hindurch transmittierte Licht des Beleuchtungslichtbündels beinhaltet, insbesondere Fluoreszenzlicht, welches von in der Probe vorhandenen Fluoreszenzmolekülen stammt, die von dem Beleuchtungslichtbündel zur Fluoreszenz angeregt werden.

Vorzugsweise wird das Beleuchtungslichtbündel mit dem Objektiv in die Probe fokussiert und das Transmissionslichtbündel von dem Objektiv kollimiert. Hierbei kann der Strahldurchmesser des Beleuchtungslichtbündels klein gegenüber der räumlichen Ausdehnung der Probe sein. In diesem Fall könnte vorgesehen sein, dass das Beleuchtungslichtbündel und die Probe relativ zueinander bewegt werden (Strahl- und/oder Probenscanning), so dass die Probe abgerastert wird.

Um das von dem Objektiv kommende Transmissionslichtbündel von dem sich auf das Objektiv zu ausbreitenden Beleuchtungslichtbündel räumlich zu trennen und auf einen zu dem Transmissionsdetektor führenden Strahlengang zu leiten, kann beispielsweise ein Strahlteiler, insbesondere eine Strahlteilerplatte, verwendet werden.

Bei einem Beispiel dieser Offenbarung wird das Beleuchtungslichtbündel, nachdem es das Objektiv durchlaufen hat, mit einem Beleuchtungslicht-Umlenkmittel derart umgelenkt, dass es sich nach der Umlenkung in einem von Null Grad verschiedenen Winkel zur optischen Achse des Objektivs ausbreitet. Insbesondere kann vorteilhaft vorgesehen sein, dass das Beleuchtungslichtbündel nachdem es das Objektiv durchlaufen hat mit einem Beleuchtungslicht-Umlenkmittel zu der zu untersuchenden Probe umgelenkt wird. Bei der Erfindung ist es vorgesehen, dass, wenn das Beleuchtungslichtbündel, nachdem es das Objektiv durchlaufen hat, mit dem Beleuchtungslicht-Umlenkmittel um einen Winkel von 90 Grad (rechter Winkel) zur optischen Achse des Objektivs zur Probe umgelenkt wird. Eine solche Ausführung zeichnet sich nämlich dadurch aus, dass das von der Probe senkrecht zur Ausbreitungsrichtung des durch die Probe verlaufenden Beleuchtungslichtes ausgehende Licht, beispielsweise für eine SPIM-Aufnahme, parallel zur optischen Achse des Objektivs, verläuft, so dass es in Geradeausrichtung zu dem auf das Objektiv treffenden Beleuchtungslichtbündel mit einem weiteren Objektiv kollimiert und anschließend detektiert werden kann. Eine solche Anordnung von Objektiven kommt dem klassischen Mikroskopaufbau sehr nahe und ist daher einfach und in robuster Ausführung, insbesondere auch durch Umbau eines vorhandenen Mikroskops, insbesondere Scanmikroskops, realisierbar.

Insbesondere bei einer Ausführung, bei der das vom Objektiv kommende Beleuchtungslichtbündel mit einem Beleuchtungslicht-Umlenkmittel zu der Probe umgelenkt wird, kann das von der Probe kommende Transmissionslichtbündel mit einem Transmissionslicht-Umlenkmittel zu dem Objektiv gelenkt werden. Bei der Erfindung ist es vorgesehen, dass das von der Probe kommende Transmissionslichtbündel mit einem Transmissionslicht-Umlenkmittel derart umgelenkt wird, dass es sich nach der Umlenkung parallel zur optischen Achse des Objektivs ausbreitet.

Um ausreichend viele Messwerte für das Errechnen eines dreidimensionalen Projektionstomogramms der Probe zu gewinnen, wird die Probe zeitlich aufeinanderfolgend an unterschiedlichen Probenorten und/oder mit unterschiedlicher Ausbreitungsrichtung des Beleuchtungslichtbündels beleuchtet. Vorzugsweise wird für jeden Probenort und für jede Ausbreitungsrichtung des Beleuchtungslichtbündels jeweils mit dem Transmissionsdetektor ein Lichtleistungswert des Transmissionslichtbündels gemessen.

Bei einer ganz besonders vorteilhaften Ausführung bleibt die Probe hierbei ortsfest, während jeweils die Position und/oder die Ausbreitungsrichtung des Beleuchtungslichtbündels relativ zur Probe verändert werden. Obwohl die Probe nicht bewegt wird, können ausreichend viele Transmissionsinformationen über die Probe gewonnen werden, um aus den Informationen ein dreidimensionales Projektionstomogramm rekonstruieren zu können; dies deshalb, weil die Probe dank der vorliegenden Erfindung im Wesentlichen aus wenigstens drei Hauptrichtungen, nämlich insbesondere entlang der optischen Achse des Objektivs und aus entgegengesetzten Richtungen quer zur optischen Achse des Objektivs, beleuchtet werden kann, was weiter unten noch detailliert erläutert wird.

Alternativ ist es jedoch auch möglich, dass die Probe relativ zur Vorrichtung und relativ zum Beleuchtungslichtbündel bewegt wird, um die Probe zeitlich aufeinanderfolgend an unterschiedlichen Probenorten und/oder mit unterschiedlicher Ausbreitungsrichtung des Beleuchtungslichtbündel zu beleuchten. Bei einer besonderen Ausführung wird die Position und/oder die Ausbreitungsrichtung des Beleuchtungslichtbündels mit einer dem Objektiv vorgeschalteten, hinsichtlich des Ablenkwinkels einstellbaren Strahlablenkeinrichtung eingestellt. Eine solche Strahlablenkeinrichtung kann beispielsweise einen kardanisch gelagerten Spiegel, dessen Winkellage beispielsweise mit Galvanometern einstellbar ist, beinhalten. Es ist beispielsweise auch möglich, dass die Strahlablenkeinrichtung zwei Galvanometerspiegel mit zueinander senkrechten Drehachsen aufweist. Es ist auch möglich, dass die Strahlablenkeinrichtung als akustooptische Strahlablenkeinrichtung ausgebildet ist. Nach einem besonderen, unabhängigen Erfindungsgedanken, wird der Scanner eines Scanmikroskops als einstellbare Strahlablenkeinrichtung zum Verändern der Position und/oder der Ausbreitungsrichtung des Beleuchtungslichtbündels verwendet.

Bei einer vorteilhaften Ausführung wird das Beleuchtungslichtbündel mit der einstellbaren Strahlablenkeinrichtung zunächst derart positioniert und ausgerichtet, dass es nach Durchlaufen des Objektivs auf ein Beleuchtungslicht-Umlenkmittel trifft und von diesem zur Probe umlenkt wird, und das von der Probe ausgehende Transmissionslichtbündel mit einem Transmissionslicht-Umlenkmittel zum Objektiv gelenkt wird. Anschließend wird das Beleuchtungslichtbündel mit der einstellbaren Strahlablenkeinrichtung derart positioniert und ausgerichtet, dass der Lichtweg umgekehrt verläuft, nämlich derart, dass das Beleuchtungslichtbündel nach Durchlaufen des Objektivs auf das Transmissionslicht-Umlenkmittel trifft und von diesem zur Probe gelenkt wird, während das Transmissionslichtbündel mit dem Beleuchtungslicht-Umlenkmittel zum Objektiv gelenkt wird. Kurz: Zur Umkehrung des Lichtweges vertauschen bei dieser Vorgehensweise die Umlenkmittel ihre Funktion. Auf diese Weise kann die Probe, ohne dass sie bewegt werden muss, aus entgegengesetzten Richtungen beleuchtet werden.

Um die Probe aus möglichst vielen Richtungen beleuchten zu können, kann eine Vielzahl von unterschiedlichen oder unterschiedlich ausgerichteten Umlenkmitteln, die als Beleuchtungslicht-Umlenkmittel und/oder als Transmissionslicht-Umlenkmittel fungieren können, vorhanden sein. Insbesondere können mehrere Umlenkmittel um die Probe herum verteilt sein. Alternativ oder zusätzlich kann auch vorgesehen sein, dass eine Umlenkvorrichtung, beispielsweise als Facettenspiegel, eine Vielzahl von Umlenkmitteln aufweist. Es kann auch ein konusförmiges Umlenkmittel, beispielsweise ein Konusspiegel, verwendet werden, das koaxial um die optische Achse des Objektivs angeordnet ist, so dass die Einfallsrichtung des Beleuchtungslichtbündels auf die Probe mit Hilfe einer hinsichtlich des Ablenkwinkels einstellbaren Strahlablenkeinrichtung um 360 Grad um die ebenfalls auf der optischen Achse angeordnete Probe gedreht werden kann. Beispielsweise kann hierzu das Beleuchtungslichtbündel mit der Strahlablenkeinrichtung derart geführt werden, dass der Auftreffort auf der Oberfläche des Konusspiegels einen Kreis beschreibt.

Jedes der Umlenkmittel kann beispielsweise einen ebenen oder einen gekrümmten Spiegel aufweisen. Es ist insbesondere auch möglich, dass das Beleuchtungslicht-Umlenkmittel und das Transmissionslicht-Umlenkmittel Bestandteile derselben Umlenkvorrichtung, beispielsweise eines Facettenspiegels, sind.

Alternativ oder zusätzlich zur Verwendung einer hinsichtlich des Ablenkwinkels einstellbaren Strahlablenkeinrichtung zum Verändern der Position und/oder der Ausbreitungsrichtung des Beleuchtungslichtbündels kann auch vorgesehen sein, dass die Position und/oder die Ausbreitungsrichtung des Beleuchtungslichtbündels durch Bewegen, insbesondere durch Verschieben und/oder durch Kippen, des Beleuchtungslicht-Umlenkmittels eingestellt werden.

Vorzugsweise ist das Beleuchtungslichtbündel im Querschnitt rund ausgebildet. Es ist jedoch auch möglich, dass das Beleuchtungslichtbündel eine andere Querschnittsform aufweist. Beispielsweise kann das Beleuchtungslichtbündel mit einer Zylinderoptik zu einem Lichtstreifen zur Beleuchtung für eine SPIM-Abbildung geformt sein. Alternativ hierzu kann, wie weiter unten noch ausführlich erläutert ist, durch schnelles Hin- und Her-Wedeln eines im Querschnitt runden Beleuchtungslichtbündels ein Quasi-Lichtstreifen für eine SPIM-Abbildung erzeugt werden.

Für den Fall, dass eine Zylinderlinse zur Formung des Beleuchtungslichtbündels verwendet wird, kann der Transmissionsdetektor vorteilhaft als Flächendetektor oder als Zeilendetektor ausgebildet sein, um simultan das gesamte, aufgefächerte Transmissionslichtbündel erfassen zu können.

Bei einer ganz besonders vorteilhaften Ausführung der Erfindung wird simultan oder sequentiell zur tomografischen Untersuchung wenigstens eine SPIM-Abbildung wenigstens einer Querschnittsebene der Probe erzeugt. Dies hat den Vorteil, dass durch vollkommen unterschiedliche Untersuchungsmethoden, insbesondere auch simultan, Informationen über die Probe gewonnen werden können. Auf diese Weise sind präzisere Aussagen über den inneren Aufbau und die Beschaffenheit der Probe möglich. Insbesondere können bei einer der Untersuchungsmethoden möglicherweise auftretende Fehler und Artefakte, durch die mittels der jeweils anderen Untersuchungsmethode gewonnenen Informationen erkannt und korrigiert werden.

Die Möglichkeit, neben einer projektionstomografischen Untersuchung eine andere Untersuchungsmethode anwenden zu können resultiert insbesondere daraus, dass dank der vorliegenden Erfindung im Bereich der Probe ein wenig eingeschränkter und leicht zugänglicher Experimentierraum zur Verfügung steht, in dem ohne weiteres - insbesondere auch koaxial oder parallel zu dem Objektiv - ein weiteres Objektiv angeordnet werden kann.

Eine Ausführung, bei der ein weiteres Objektiv zum Kollimieren des Detektionslichtes für eine SPIM-Abbildung (SPIM: Selective Plane Illumination Microscopy) koaxial oder parallel zu dem Objektiv angeordnet ist, hat den besonderen Vorteil, dass sie besonders kompakt aufgebaut sein kann und dass sie dem klassischen Mikroskopaufbau ähnelt, was die Verwendung herkömmlicher Mikroskopstative erlaubt oder eine einfache Umrüstbarkeit bestehender Mikroskopsysteme ermöglicht.

Zum Erzeugen einer SPIM-Abbildung wird eine Probe mit einem dünnen Lichtstreifen beleuchtet, während die Beobachtung der beleuchteten Probenschicht senkrecht zu der Ebene des beleuchtenden Lichtstreifens durch Detektion des Fluoreszenzund/oder Streulichtes erfolgt. Aus den Abbildungen unterschiedlicher Probenschichten, insbesondere aus einem Stapel von Abbildungen zueinander paralleler Probenschichten, kann eine dreidimensionale Abbildung der Probe erzeugt werden. Der Detektor zur Aufnahme der SPIM-Abbildungen kann beispielsweise als Kamera und/oder als CCD-Kamera und/oder als SCMOS-Detektor und/oder als Flächendetektor ausgebildet sein.

Wie bereits erwähnt kann ein Lichtstreifen für eine SPIM-Beleuchtung aus dem Beleuchtungslichtbündel beispielsweise mit einer Zylinderoptik geformt werden.

Stattdessen kann für eine SPIM-Beleuchtung jedoch auch ein Quasi-Lichtstreifen durch Hin- und Her-Wedeln des Beleuchtungslichtbündels in einer Lichtstreifenebene erzeugt werden. Beispielsweise kann vorgesehen sein, dass zunächst ein im Querschnitt weitgehend rundes Beleuchtungslichtbündel erzeugt wird, den eine Strahlablenkeinrichtung, die insbesondere der Scanner eines Scanmikroskops sein kann, derart schnell hin- und her wedelt, dass dieser einen Quasi-Lichtstreifen bildet. Insbesondere kann vorgesehen sein, dass das Beleuchtungslichtbündel derart schnell hin- und her gewedelt wird, dass der das Detektionslicht empfangende Detektor weitgehend die gleichen Detektionssignale erzeugt, wie bei einer Beleuchtung mit einem beispielsweise mit einer Zylinderoptik erzeugten Lichtstreifen, und/oder dass der Quasi-Lichtstreifen für den eingesetzten SPIM-Detektor von einem beispielsweise mit einer Zylinderoptik erzeugten Lichtstreifen nicht zu unterscheiden ist.

Wie bereits erwähnt kann vorteilhaft simultan eine projektionstomografische Untersuchung und eine SPIM-Untersuchung einer Probe vorgenommen werden. Insoweit kann insbesondere vorgesehen sein, dass durch Hin- und Her-Wedeln des Beleuchtungslichtbündels in einer Lichtstreifenebene ein Quasi-Lichtstreifen zur Beleuchtung für eine SPIM-Abbildung erzeugt wird, wobei simultan für unterschiedliche Beleuchtungsorte und/oder für unterschiedlicher Ausbreitungsrichtungen des Beleuchtungslichtbündels jeweils das Transmissionslichtbündel für die tomografische Untersuchung detektiert wird.

Die Verwendung eines aus einem weitgehend runden Beleuchtungslichtbündel hergestellten Quasi-Lichtstreifens hat die besonderen Vorteile, dass auf eine zusätzliche Optik verzichtet werden kann und dass auch weitgehend beliebig geformte, insbesondere auch gekrümmte, Quasi-Lichtstreifen erzeugt werden können. Außerdem ist die Verwendung eines aus einem weitgehend runden Beleuchtungslichtbündel hergestellten Quasi-Lichtstreifens vorteilhaft für eine simultane projektionstomografische Untersuchung, weil die jeweils gemessenen Transmissionswerte einfach den dazugehörigen Beleuchtungsorten und Ausbreitungsrichtungen des Beleuchtungslichtbündels zugeordnet werden können.

Insbesondere für eine SPIM-Untersuchung, jedoch auch zur Durchführung anderer Untersuchungen der Probe simultan oder sequentiell zu einer projektionstomografischen Untersuchung kann ganz allgemein vorgesehen sein, dass von der Probe unter einem von Null Grad zur Ausbreitungsrichtung des auf die Probe fallenden Beleuchtungslichtstrahles verschiedenen Winkel, insbesondere unter einem Winkel von 90 Grad zur Ausbreitungsrichtung des auf die Probe fallenden Beleuchtungslichtstrahles, ausgehendes Licht ein weiteres Objektiv durchläuft und mit einem vom Transmissionsdetektor verschiedenen Detektor detektiert wird. Bei dem Licht kann es sich beispielsweise um Fluoreszenzlicht und/oder Streulicht handeln.

Wie bereits erwähnt, kann das weitere Objektiv vorteilhaft insbesondere derart ausgerichtet sein, dass die optische Achse des weiteren Objektivs unter einem Winkel von 90 Grad (rechter Winkel) zur Ausbreitungsrichtung des auf die Probe fallenden Beleuchtungslichtstrahles ausgerichtet ist, und/oder dass die optische Achse des weiteren Objektivs parallel oder koaxial zur optischen Achse des Objektivs ausgerichtet ist. Es ist jedoch grundsätzlich auch möglich, dass die optische Achse des weiteren Objektivs unter einem anderen, von Null Grad zur Ausbreitungsrichtung des auf die Probe fallenden Beleuchtungslichtstrahles ausgerichtet ist.

Wie bereits erwähnt, kann die Probe dank der vorliegenden Erfindung im Wesentlichen aus wenigstens drei Hauptrichtungen, nämlich insbesondere entlang der optischen Achse des Objektivs und aus entgegengesetzten Richtungen quer zur optischen Achse des Objektivs, beleuchtet werden. Die Vorgehensweise für eine Beleuchtung aus entgegengesetzten Richtungen quer zur optischen Achse des Objektivs wurde bereits oben erläutert. Eine Beleuchtung entlang der optischen Achse des Objektivs erfolgt ohne Verwendung des Beleuchtungs-Umlenkmittels und des Transmissions-Umlenkmittels in einer Durchlichtanordnung. Das Beleuchtungslichtbündel wird hierbei derart ausgerichtet, dass es nach Durchlaufen des Objektivs ohne Umlenkung auf die Probe trifft und das Transmissionslichtbündel in Geradeausrichtung zu einem weiteren Objektiv, das auch als Kondensoroptik ausgebildet sein kann, gelangt. Nach dem Durchlaufen des weiteren Objektivs wird das Transmissionslichtbündel auf einen Strahlengang gelenkt, auf dem es zu einem Detektor, insbesondere einem weiteren Transmissionsdetektor, gelangt.

Während einer projektionstomografischen Untersuchung in Durchlichtanordnung ist die oben beschriebene SPIM-Untersuchung nicht möglich. Vielmehr kann das für eine SPIM-Untersuchung zu verwendende, weitere Objektiv zum Kollimieren des Transmissionslichtbündels verwendet werden und hierfür, abgesehen von möglicherweise nötigen Anpassungen der Fokuslage, in seiner Position verbleiben. Bei einer besonderen Ausführung wird der SPIM-Detektor hierbei als Transmissionsdetektor verwendet.

Das Beleuchtungslicht-Umlenkmittel und/oder das Transmissionslicht-Umlenkmittel können vorteilhaft an dem Objektiv oder an dem weiteren Objektiv angeordnet sein. Dies hat den Vorteil, dass keine großen zusätzlichen Stativteile erforderlich sind, die von außen in den Probenbereich ragen und selbst Platz wegnehmen würden. Außerdem gewährleistet eine Anordnung an dem Objektiv oder dem weiteren Objektiv eine große Stabilität, weil die Objektive selbst bereits stabil gehalten sein müssen.

Bei einer besonderen Ausführung sind das Beleuchtungslicht-Umlenkmittel und/oder das Transmissionslicht-Umlenkmittel beweglich, insbesondere verschiebbar und/oder verkippbar, an dem Objektiv oder an dem weiteren Objektiv angeordnet sein. Eine solche Ausführung hat den ganz besonderen Vorteil, dass durch ein Bewegen des Beleuchtungslicht-Umlenkmittels in eine andere Stellung oder in eine andere Ausrichtung der Beleuchtungsort und/oder die Ausrichtung des Beleuchtungslichtbündels geändert werden kann. Analog kann durch ein Bewegen des Transmissionslicht-Umlenkmittels in eine andere Stellung oder in eine andere Ausrichtung die Position und/oder die Ausrichtung des Transmissionslichtbündels geändert werden.

Wie bereits erwähnt, kann das erfindungsgemäße Verfahren vorteilhaft mit einem Scanmikroskop oder mit einem konfokalen Scanmikroskop ausgeführt werden. Hierbei kann insbesondere ein möglicherweise ohnehin vorhandener NDD-Detektor (Non-Descan-Detector) als Transmissionslichtdetektor und/oder, insbesondere wenn der NDD-Detektor als Flächendetektor ausgebildet ist, als SPIM-Detektor verwendet werden. Insbesondere kann die erfindungsgemäße Vorrichtung wenigstens teilweise aus einem Scanmikroskop oder aus einem konfokalen Scanmikroskop gebildet sein.

In der Zeichnung ist der Erfindungsgegenstand schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: eine schematische Darstellung eines Ausführungsbeispiels einer erfindungsgemäßen Vorrichtung,
- Fig.2: eine Prinzipdarstellung zur Veranschaulichung eines Ausführungsbeispiels des erfindungsgemäßen Verfahrens bei Beleuchtung aus einer ersten Hauptrichtung,
- Fig. 3: eine Prinzipdarstellung zur Veranschaulichung eines Ausführungsbeispiels des erfindungsgemäßen Verfahrens bei Beleuchtung aus einer zweiten, zur ersten entgegengesetzten Hauptrichtung,
- Fig. 4: eine Prinzipdarstellung zur Veranschaulichung eines nicht erfindungsgemäßen Verfahrens bei Beleuchtung aus der ersten Hauptrichtung, und
- Fig. 5: ein Ausführungsbeispiel einer erfindungsgemäßen Vorrichtung auf der Basis eines konfokalen Scanmikroskops.

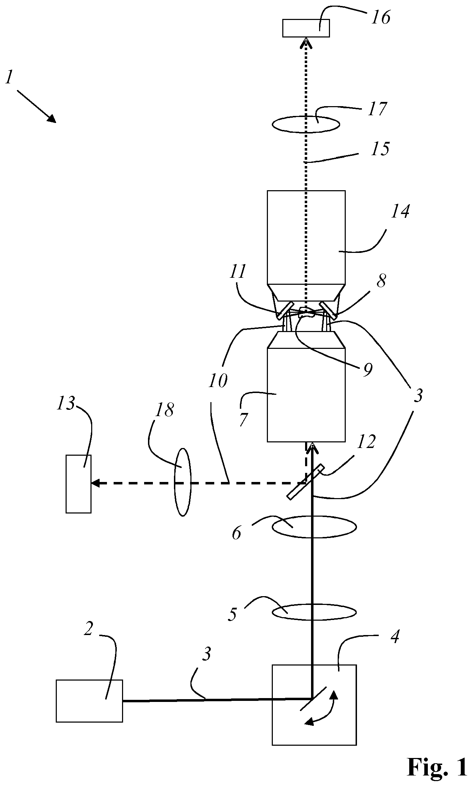

Fig. 1 zeigt ein Ausführungsbeispiel einer erfindungsgemäßen Vorrichtung 1. Die Vorrichtung weist eine Lichtquelle 2 auf, die insbesondere als Laser ausgebildet sein kann. Die Lichtquelle 2 emittiert ein Beleuchtungslichtbündel 3, das von einer hinsichtlich des Ablenkwinkels einstellbaren Strahlablenkeinrichtung 4 umgelenkt wird. Nach der Umlenkung verläuft das Beleuchtungslichtbündel 3 durch eine Scanlinse 5 und eine Tubuslinse 6, passiert einen Strahlteiler 12 und gelangt zu einem Objektiv 7, das das Beleuchtungslichtbündel 3 fokussiert.

Die Strahlablenkeinrichtung 4 ist derart eingestellt, dass das Beleuchtungslichtbündel 3 verkippt zur optischen Achse durch die Objektivpupille des Objektivs 7 tritt, so dass es das Objektiv 7 außermittig, also mit einem seitlichen Versatz zur optischen Achse des Objektivs 7, verlässt und anschließend auf ein Beleuchtungslicht-Umlenkmittel 8 trifft, das das Beleuchtungslichtbündel 3 zu einer Probe 9, vorzugsweise um ca. 90 Grad, umlenkt. In der Probe 9 weist das Beleuchtungslichtbündel 3 einen Fokus auf.

Der durch die Probe 9 hindurch transmittierte Teil des Beleuchtungslichtbündels 3 verlässt die Probe 9 als Transmissionslichtbündel 10 und wird von einem Transmissionslicht-Umlenkmittel 11 zu dem Objektiv 7 umgelenkt. Das Transmissionslichtbündel 10 verläuft ebenso wie das Beleuchtungslichtbündel 3 durch das Objektiv 7; jedoch im Wesentlichen mit entgegengesetzter oder umgekehrter Richtung bzw. Ausbreitungsrichtung.

Nach Durchlaufen des Objektivs 7 wird das Transmissionslichtbündel 10 wenigstens zum Teil von einem Strahlteiler 12 zu einer Linse 18 umgelenkt, die das Transmissionslichtbündel 10 auf einen Transmissionsdetektor 13 fokussiert.

Um Messwerte für das Errechnen eines dreidimensionalen Projektionstomogramms der Probe 9 zu gewinnen, wird die Probe 9 zeitlich aufeinanderfolgend an unterschiedlichen Probenorten und/oder mit unterschiedlicher Ausbreitungsrichtung des Beleuchtungslichtbündels 3 beleuchtet und für jeden Probenort und für jede Ausbreitungsrichtung des Beleuchtungslichtbündels 3 jeweils mit dem Transmissionsdetektor 13 ein Lichtleistungswert des Transmissionslichtbündels 10 gemessen. Hierzu wird die räumliche Position und die Ausbreitungsrichtung des Beleuchtungslichtbündels 3 mit Hilfe der Strahlablenkeinrichtung 4 fortlaufend verändert. Zusätzlich können zu diesem Zweck auch das Beleuchtungslicht-Umlenkmittel 8 und/oder das Transmissionslicht-Umlenkmittel 11, die beide an einem weiteren Objektiv 14 beweglich angeordnet sind, verstellt werden.

Simultan oder sequentiell zu einer Detektion des Transmissionslichtbündels 10 wird zusätzlich mit einem vom Transmissionsdetektor 13 verschiedenen Detektor 16 Detektionslicht 15 detektiert, das senkrecht zur Ausbreitungsrichtung des auf die Probe 9 fallenden Beleuchtungslichtstrahles 3 von der Probe 9 ausgeht. Das Detektionslicht 15 durchläuft das weitere Objektiv 14 und wird dann einer weiteren Tubuslinse 17 auf den Detektor 16 fokussiert. Konkret wird durch Hin- und Her-Wedeln des Beleuchtungslichtbündels 3 mit der Strahlablenkeinrichtung 4 in einer zur optischen Achse des Objektivs 7 senkrechten Lichtstreifenebene ein Quasi-Lichtstreifen zur flächigen Beleuchtung einer Probenschicht der Probe 9 für eine SPIM-Abbildung erzeugt. Der Detektor 16 ist als Kamera zum Aufnehmen einer Abbildung der beleuchteten Probenschicht ausgebildet.

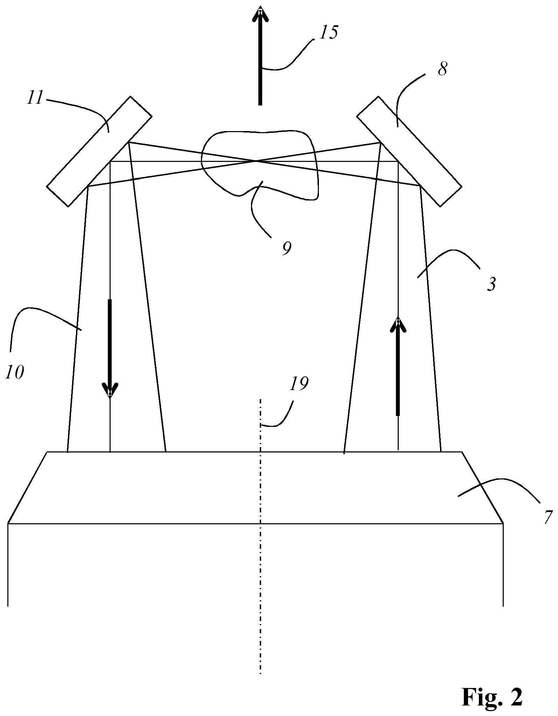

Fig. 2 zeigt in einer Detaildarstellung, dass das vom Objektiv 7 kommende Beleuchtungslichtbündel 3 mit einem Beleuchtungslicht-Umlenkmittel 8 in einem rechten Winkel zu der Probe 9 umgelenkt wird, und dass das von der Probe 9 kommende Transmissionslichtbündel 10 von einem Transmissionslicht-Umlenkmittel 11 zu dem Objektiv 7 umgelenkt wird. Das Detektionslicht 15 für die SPIM-Abbildung verläuft in Richtung der optischen Achse 19 des Objektivs 7.

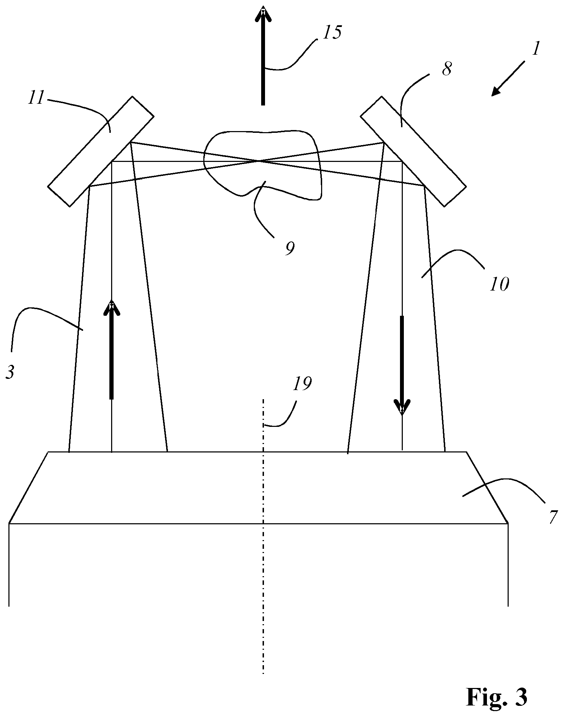

Fig. 3 zeigt, wie die Probe 9 auf der entgegengesetzten Richtung mit einem Beleuchtungslichtbündel 3 beleuchtet werden kann. Das Beleuchtungslichtbündel 3 wird mit der einstellbaren Strahlablenkeinrichtung 4 derart positioniert und ausgerichtet, dass der Lichtweg umgekehrt verläuft, nämlich derart, dass das Beleuchtungslichtbündel 3 nach Durchlaufen des Objektivs 7 auf das Transmissionslicht-Umlenkmittel 11 trifft und von diesem zur Probe 9 gelenkt wird, während das Transmissionslichtbündel 10 mit dem Beleuchtungslicht-Umlenkmittel 8 zum Objektiv 7 gelenkt wird.

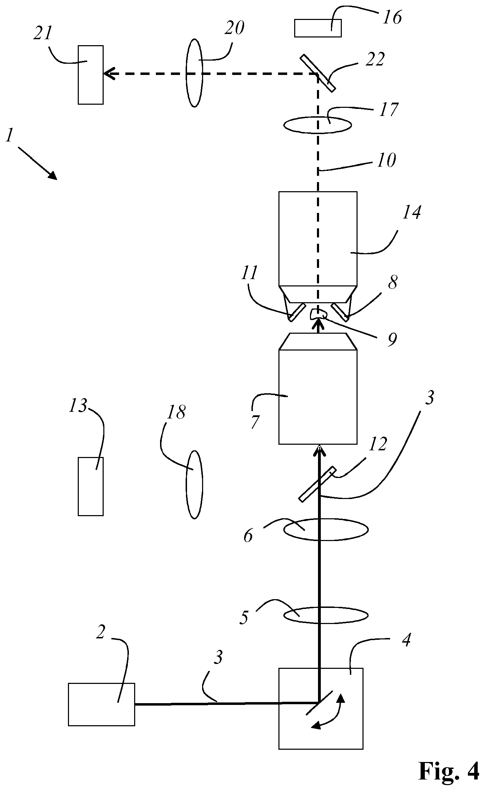

Fig. 4 zeigt, wie die Probe 9 aus einer zusätzlichen Hauptbeleuchtungsrichtung, nämlich im Wesentlichen koaxial zur optischen Achse des Objektivs 7, beleuchtet werden kann. Eine solche Beleuchtung erfolgt ohne Verwendung des Beleuchtungs-Umlenkmittels 8 und ohne Verwendung des Transmissions-Umlenkmittels 11 in einer Durchlichtanordnung. Das Beleuchtungslichtbündel 3 wird hierzu mit der Strahlablenkeinrichtung 4 derart ausgerichtet, dass es zentral durch die Objektivpupille des Objektivs 7 verläuft und nach Durchlaufen des Objektivs 7 ohne Umlenkung auf die Probe 9 trifft, so dass das Transmissionslichtbündel 10 in Geradeausrichtung zu dem weiteren Objektiv 14 gelangt. Durch sukzessives Verkippen des Beleuchtungslichtbündels 3 in der Objektivpupille relativ zur optischen Achse des Objektivs 7 kann jeweils ein seitlicher Versatz des aus dem Objektiv 7 austretenden Beleuchtungslichtbündels 3 bewirkt werden, um sukzessive andere Probenbereiche zu durchleuchten. Nach dem Durchlaufen des weiteren Objektivs 14 wird das Transmissionslichtbündel 10 mit einem Spiegel 22 umgelenkt und dann von einer Optik 20 auf einen weiteren Transmissionsdetektor 21 fokussiert. Mit Hilfe der Strahlablenkeinrichtung 4 können der Auftreffort des Beleuchtungslichtbündels 3 auf die Probe 9 und/oder die Ausbreitungsrichtung des Beleuchtungslichtbündels 3 innerhalb der Probe 9 variiert werden, um für jeden Auftreffort und/oder jede Ausbreitungsrichtung einen Transmissionswert für eine spätere tomografische Rekonstruktion eines Abbildes der Probe 9 zu messen. Für die spätere Rekonstruktion können daher außer den Messwerten, die bei der Beleuchtung quer zur optischen Achse des Objektivs 19 gewonnen wurden, auch die Messwerte berücksichtigt werden, die bei der beschriebenen Durchlichtanordnung gewonnen wurden.

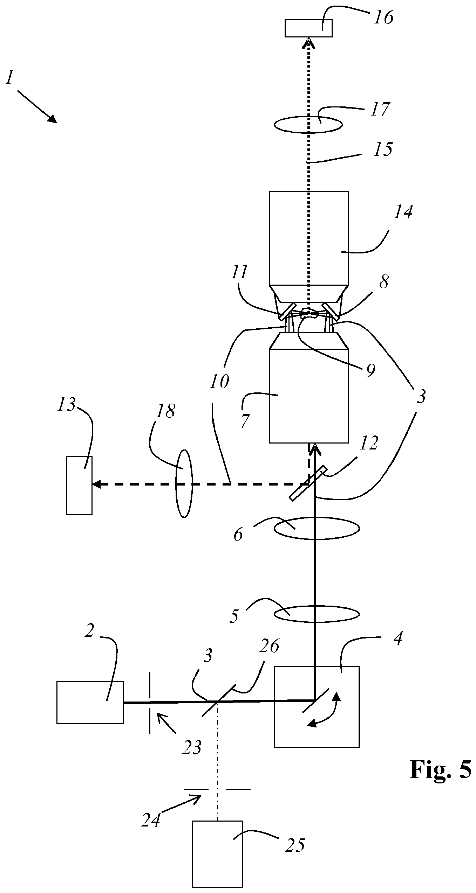

Fig. 5 zeigt ein Ausführungsbeispiel einer erfindungsgemäßen Vorrichtung 1, die auf der Basis eines konfokalen Scanmikroskops, das neben vielen Komponenten, die für die oben geschilderten Untersuchungen benötigt werden auch eine Beleuchtungslochblende 23, eine Detektionslochblende 24 und einen Multibanddetektor 25, sowie einem dichroitischen Strahlteiler 26 zum Separieren des Anregungsstrahlenganges zum Detektionsstrahlengang, aufweist. Diese Elemente werden für die oben beschriebenen Untersuchungsmethoden jedoch nicht benötigt. Ein NDD-Detektor des konfokalen Scanmikroskops wird als Transmissionslichtdetektor 13 zur Detektion des Transmissionslichtbündels 10 verwendet. Wird eine abbildende Optik im NDD Strahlengang verwendet (Tubuslinse), kann auch ein ortsauflösender Detektor (Kamera, CCD, CMOS, SCMOS) verwendet werden.

## Patentansprüche

1. Vorrichtung zum Untersuchen einer Probe (9) mittels optischer Projektionstomografie, mit einer Lichtquelle (2), die ein Beleuchtungslichtbündel (3) erzeugt, das die zu untersuchende Probe (9) beleuchtet, mit einem Transmissionsdetektor (13) zum Detektieren eines Transmissionslichtbündels (10), das durch die Probe (9) hindurch transmittiertes Licht des Beleuchtungslichtbündels (3) beinhaltet, und mit einem Objektiv (7), wobei das Beleuchtungslichtbündel (3) und das Transmissionslichtbündel (10) mit entgegengesetzten Ausbreitungsrichtungen durch dasselbe Objektiv (7) verlaufen, **dadurch gekennzeichnet, dass** das Beleuchtungslichtbündel (3) das Objektiv (7) mit einem seitlichen Versatz zur optischen Achse (19) des Objektivs (7) verlässt, wobei das Beleuchtungslichtbündel (3), nachdem es das Objektiv (7) durchlaufen hat, mit einem Beleuchtungslicht-Umlenkmittel (8) um einen Winkel von ca. 90 Grad zur optischen Achse (19) des Objektivs (7) zur Probe umgelenkt wird, und wobei das von der Probe kommende Transmissionslichtbündel (10) mit einem Transmissionslicht-Umlenkmittel (11) derart umgelenkt wird, dass es sich nach der Umlenkung parallel zur optischen Achse (19) des Objektivs (7) ausbreitet.

2. Vorrichtung nach Anspruch 1, **dadurch gekennzeichnet, dass**
a. die Probe (9) zeitlich aufeinanderfolgend an unterschiedlichen Probenorten und/oder mit unterschiedlicher Ausbreitungsrichtung des Beleuchtungslichtbündels (3) beleuchtbar ist, oder dass
b. die Probe (9) zeitlich aufeinanderfolgend an unterschiedlichen Probenorten und/oder mit unterschiedlicher Ausbreitungsrichtung des Beleuchtungslichtbündels (3) beleuchtbar ist, wobei die Probe (9) ortsfest bleibt und jeweils die Position und/oder die Ausbreitungsrichtung des Beleuchtungslichtbündels (3) relativ zur Probe (9) verändert wird.

3. Vorrichtung nach Anspruch 2, **dadurch gekennzeichnet, dass**
a. die Position und/oder die Ausbreitungsrichtung des Beleuchtungslichtbündels (3) mit einer dem Objektiv (7) vorgeschalteten hinsichtlich des Ablenkwinkels einstellbaren Strahlablenkeinrichtung (4) einstellbar ist, und/oder dass
b. die Position und/oder die Ausbreitungsrichtung des Beleuchtungslichtbündels (3) durch Bewegen des Umlenkmittels einstellbar ist.

4. Vorrichtung nach einem der Ansprüche 1 bis 3, **dadurch gekennzeichnet, dass**
a. ein vom Transmissionsdetektor (13) verschiedener Detektor (16) simultan oder sequentiell zur tomografischen Untersuchung Licht für wenigstens eine SPIM-Abbildung (Selective Plane Illumination Microscopy) wenigstens einer Querschnittsebene der Probe (9) empfängt, oder dass
b. eine Strahlablenkeinrichtung durch Hin- und Her-Wedeln des Beleuchtungslichtbündels (3) in einer Lichtstreifenebene einen Quasi-Lichtstreifen zur Beleuchtung füreine SPIM-Abbildung erzeugt, und oder dass
c. eine Strahlablenkeinrichtung durch Hin- und Her-Wedeln des Beleuchtungslichtbündels (3) in einer Lichtstreifenebene einen Quasi-Lichtstreifen zur Beleuchtung für eine SPIM-Abbildung erzeugt, wobei der Transmissionsdetektor (13) simultan für unterschiedliche Beleuchtungsorte und/oder für unterschiedliche Ausbreitungsrichtungen des Beleuchtungslichtbündels (3) jeweils das Transmissionslichtbündel (10) für die tomografische Untersuchung detektiert.

5. Vorrichtung nach einem der Ansprüche 1 bis 4 **dadurch gekennzeichnet, dass**
a. von der Probe (9) unter einem von Null Grad zur Ausbreitungsrichtung des auf die Probe (9) fallenden Beleuchtungslichtstrahles verschiedenen Winkel ausgehendes Licht ein weiteres Objektiv (14) durchläuft und von einem vom Transmissionsdetektor (13) verschiedenen Detektor (16) detektiert wird, oder dass
b. von der Probe (9) im Wesentlichen unter einem Winkel von 90 Grad zur Ausbreitungsrichtung des auf die Probe (9) fallenden Beleuchtungslichtstrahles verschiedenen Winkel ausgehendes Licht ein weiteres Objektiv (14) durchläuft von einem vom Transmissionsdetektor (13) verschiedenen Detektor (16)detektiert wird.

6. Vorrichtung nach Anspruch 5, **dadurch gekennzeichnet, dass**
a. die optische Achse des weiteren Objektivs (14) unter einem Winkel von Null Grad zur Ausbreitungsrichtung des auf die Probe (9) fallenden Beleuchtungslichtstrahles ausgerichtet ist, oder dass
b. die optische Achse des weiteren Objektivs (14) unter einem Winkel von 90 Grad (rechter Winkel) zur Ausbreitungsrichtung des auf die Probe (9) fallenden Beleuchtungslichtstrahles ausgerichtet ist, oder dass
c. die optische Achse des weiteren Objektivs (14) parallel oder koaxial zur optischen Achse des Objektivs (7) ausgerichtet ist.

7. Vorrichtung nach einem der Ansprüche 1 bis 6, **dadurch gekennzeichnet, dass** ein weiterer Transmissionsdetektor (21) derart angeordnet ist, Transmissionslicht zu empfangen und zu detektieren, das statt durch das Objektiv (7) durch ein weiteres Objektiv (14) verläuft.

8. Vorrichtung nach einem der Ansprüche 1 bis 7, **dadurch gekennzeichnet, dass**
a. das Beleuchtungslicht-Umlenkmittel (8) und/oder das Transmissionslicht-Umlenkmittel (11), insbesondere beweglich, an dem Objektiv (7) angeordnet ist, oder dass das Beleuchtungslicht-Umlenkmittel (8) und/oder das Transmissionslicht-Umlenkmittel (11), insbesondere beweglich, an dem weiteren Objektiv (14) angeordnet ist, oder dass
b. das Beleuchtungslicht-Umlenkmittel (8) und das Transmissionslicht-Umlenkmittel (11) Bestandteile derselben Umlenkvorrichtung sind.

9. Vorrichtung nach einem der Ansprüche 1 bis 8, **dadurch gekennzeichnet, dass** die Vorrichtung wenigstens teilweise aus einem Scanmikroskop oder aus einem konfokalen Scanmikroskop gebildet ist.

10. Verfahren zum Untersuchen einer Probe (9) mittels optischer Projektionstomografie, insbesondere zum Betreiben einer Vorrichtung nach einem der Ansprüche 1 bis 9, bei dem eine Probe (9) mit einem Beleuchtungslichtbündel (3) beleuchtet wird und bei dem ein Transmissionslichtbündel (10), das das durch die Probe (9) hindurch transmittierte Licht des Beleuchtungslichtbündels (3) beinhaltet, mit einem Transmissionsdetektor (13) detektiert wird, wobei das Beleuchtungslichtbündel (3) und das Transmissionslichtbündel (10) mit entgegengesetzten Ausbreitungsrichtungen durch dasselbe Objektiv (7) gelenkt werden, wobei das Beleuchtungsbündel (3) das Objektiv (7) mit einem seitlichen Versatz zur optischen Achse (19) des Objektivs (7) verlässt, wobei das Beleuchtungslichtbündel (3), nachdem es das Objektiv (7) durchlaufen hat, mit dem Beleuchtungslicht-Umlenkmittel um einen Winkel von ca. 90 Grad zur optischen Achse (19) des Objektivs (7) zur Probe umgelenkt wird, und wobei das von der Probe kommende Transmissionslichtbündel (10) mit einem Transmissionslicht-Umlenkmittel (11) derart umgelenkt wird, dass es sich nach der Umlenkung parallel zur optischen Achse (19) des Objektivs (7) ausbreitet.

## Claims

1. Device for examining a sample (9) by means of optical projection tomography, having a light source (2), which generates an illumination light beam (3), which illuminates the sample (9) to be examined, having a transmission detector (13) for detecting a transmission light beam (10), which comprises light of the illumination light beam (3) transmitted through the sample (9), and having an objective (7), wherein the illumination light beam (3) and the transmission light beam (10) pass through the same objective (7) with opposite propagation directions, **characterized in that** the illumination light beam (3) exits the objective (7) with a lateral offset relative to the optical axis (19) of the objective (7), wherein the illumination light beam (3), after it has passed through the objective (7), is deflected to the sample by an illumination light deflection means (8) through an approximately 90-degree angle relative to the optical axis (19) of the objective (7), and wherein the transmission light beam (10) coming from the sample is deflected by a transmission light deflection means (11) in such a way that after the deflection it propagates parallel to the optical axis (19) of the objective (7).

2. Device according to Claim 1, **characterized in that**
a. the sample (9) is illuminable successively in time at different sample locations and/or with a different propagation direction of the illumination light beam (3), or **in that**
b. the sample (9) is illuminable successively in time at different sample locations and/or with a different propagation direction of the illumination light beam (3), wherein the sample (9) remains stationary and the position and/or the propagation direction of the illumination light beam (3) respectively is changed relative to the sample (9).

3. Device according to Claim 2, **characterized in that**
a. the position and/or the propagation direction of the illumination light beam (3) is settable with a beam deflection apparatus (4) that is upstream of the objective (7) and settable with respect to the deflection angle, and/or **in that**
b. the position and/or the propagation direction of the illumination light beam (3) is settable by moving the deflection means.

4. Device according to any of Claims 1 to 3, **characterized in that**
a. a detector (16), which differs from the transmission detector (13), simultaneously or sequentially to the tomographic examination receives light for at least one SPIM image (selective plane illumination microscopy) of at least one cross-sectional plane of the sample (9), or **in that**
b. a beam deflection apparatus generates a quasi light strip for illumination for an SPIM image, by means of moving the illumination light beam (3) back and forth in a light strip plane, and/or **in that**
c. a beam deflection apparatus generates a quasi light strip for illumination for an SPIM image, by means of moving the illumination light beam (3) back and forth in a light strip plane, wherein the transmission detector (13) detects the transmission light beam (10) for the tomographic examination simultaneously for different illumination locations and/or for different propagation directions of the illumination light beam (3), respectively.

5. Device according to any of Claims 1 to 4, **characterized in that**
a. light emanating from the sample (9) at a different angle to zero degrees relative to the propagation direction of the beam of illumination light incident on the sample (9) passes through an additional objective (14) and is detected by a detector (16), which differs from the transmission detector (13), or **in that**
b. light emanating from the sample (9) at a different angle to a substantially 90 degree angle relative to the propagation direction of the beam of illumination light incident on the sample (9) passes through an additional objective (14), is detected by a detector (16), which differs from the transmission detector (13).

6. Device according to Claim 5, **characterized in that**
a. the optical axis of the additional objective (14) is oriented at an angle of zero degrees relative to the propagation direction of the beam of illumination light incident on the sample (9), or **in that**
b. the optical axis of the additional objective (14) is oriented at a 90-degree angle (right angle) relative to the propagation direction of the beam of illumination light incident on the sample (9), or **in that**
c. the optical axis of the additional objective (14) is oriented parallel or coaxial to the optical axis of the objective (7).

7. Device according to any of Claims 1 to 6, **characterized in that** an additional transmission detector (21) is arranged in such a way to receive and to detect transmission light which passes through an additional objective (14) instead of through the objective (7).

8. Device according to any of Claims 1 to 7, **characterized in that**
a. the illumination light deflection means (8) and/or the transmission light deflection means (11) is arranged, in particular movably arranged, at the objective (7), or **in that** the illumination light deflection means (8) and/or the transmission light deflection means (11) is arranged, in particular movably arranged, at the additional objective (14), or **in that**
b. the illumination light deflection means (8) and the transmission light deflection means (11) are constituent parts of the same deflection device.

9. Device according to any of Claims 1 to 8, **characterized in that** the device is at least partially formed of a scanning microscope or of a confocal scanning microscope.

10. Method for examining a sample (9) by means of optical projection tomography, in particular for operating a device according to any of Claims 1 to 9, in which a sample (9) is illuminated with an illumination light beam (3) and in which a transmission light beam (10), which comprises light of the illumination light beam (3) transmitted through the sample (9), is detected with a transmission detector (13), wherein the illumination light beam (3) and the transmission light beam (10) are deflected through the same objective (7) with opposite propagation directions, wherein the illumination light beam (3) exits the objective (7) with a lateral offset relative to the optical axis (19) of the objective (7), wherein the illumination light beam (3), afterit has passed through the objective (7), is deflected to the sample by an illumination light deflection means (8) through an approximately 90-degree angle relative to the optical axis (19) of the objective (7), and wherein the transmission light beam (10) coming from the sample is deflected by a transmission light deflection means (11) in such a way that after the deflection it propagates parallel to the optical axis (19) of the objective (7).

## Revendications

1. Dispositif pour examiner un échantillon (9) au moyen de la tomographie optique par projection, comprenant une source de lumière (2) qui génère un faisceau de lumière d'éclairage (3) qui éclaire l'échantillon (9) à examiner, comprenant un détecteur de transmission (13) destiné à détecter un faisceau de lumière de transmission (10) qui contient la lumière du faisceau de lumière d'éclairage (3) transmise à travers l'échantillon (9), et comprenant un objectif (7), le faisceau de lumière d'éclairage (3) et le faisceau de lumière de transmission (10) suivant un tracé avec des directions de propagation opposées à travers le même objectif (7), **caractérisé en ce que** le faisceau de lumière d'éclairage (3) quitte l'objectif (7) avec un décalage latéral par rapport à l'axe optique (19) de l'objectif (7), le faisceau de lumière d'éclairage (3), après être passé à travers l'objectif (7), étant dévié vers l'échantillon avec un moyen de déviation de lumière d'éclairage (8) d'un angle d'environ 90 degrés par rapport à l'axe optique (19) de l'objectif (7), et le faisceau de lumière de transmission (10) en provenance de l'échantillon étant dévié par un moyen de déviation de lumière de transmission (11) de telle sorte qu'après la déviation, il se propage parallèlement à l'axe optique (19) de l'objectif (7).

2. Dispositif selon la revendication 1, **caractérisé en ce que**
a. l'échantillon (9) peut être éclairé successivement dans le temps en différents endroits d'échantillon et/ou avec des directions de propagation différentes du faisceau de lumière d'éclairage (3), ou **en ce que**
b. l'échantillon (9) peut être éclairé successivement dans le temps en différents endroits d'échantillon et/ou avec des directions de propagation différentes du faisceau de lumière d'éclairage (3), l'échantillon (9) restant en position fixe et la position et/ou la direction de propagation du faisceau de lumière d'éclairage (3) étant respectivement modifiée par rapport à l'échantillon (9).

3. Dispositif selon la revendication 2, **caractérisé en ce que**
a. la position et/ou la direction de propagation du faisceau de lumière d'éclairage (3) est réglable avec un déflecteur de faisceau (4) monté en amont de l'objectif (7) et dont l'angle de déflexion est réglable, et/ou **en ce que**
b. la position et/ou la direction de propagation du faisceau de lumière d'éclairage (3) est réglable par un mouvement du moyen de déviation.

4. Dispositif selon l'une des revendications 1 à 3, **caractérisé en ce que**
a. un détecteur (16) différent du détecteur de transmission (13) reçoit simultanément ou séquentiellement à l'examen tomographique de la lumière pour au moins une représentation SPIM (Selective Plane Illumination Microscopy - Microscopie à nappe de lumière) d'au moins un plan de section transversale de l'échantillon (9), ou **en ce que**
b. un déflecteur de faisceau génère une quasi-bande de lumière destinée à l'éclairage pour une représentation SPIM en remuant d'avant en arrière le faisceau de lumière d'éclairage (3) dans un plan de bande de lumière, ou **en ce que**
c. un déflecteur de faisceau génère une quasi-bande de lumière destinée à l'éclairage pour une représentation SPIM en remuant d'avant en arrière le faisceau de lumière d'éclairage (3) dans un plan de bande de lumière, le détecteur de transmission (13) détectant respectivement le faisceau de lumière de transmission (10) pour l'examen tomographique simultanément pour différents endroits d'éclairage et/ou pour différentes directions de propagation du faisceau de lumière d'éclairage (3).

5. Dispositif selon l'une des revendications 1 à 4 **caractérisé en ce que**
a. la lumière qui émane de l'échantillon (9) sous un angle différent de zéro par rapport à la direction de propagation du faisceau de lumière d'éclairage incident sur l'échantillon (9) passe à travers un objectif supplémentaire (14) et est détectée par un détecteur (16) différent du détecteur de transmission (13), ou **en ce que**
b. la lumière qui émane de l'échantillon (9) sensiblement sous un angle de 90 degrés par rapport à la direction de propagation du faisceau de lumière d'éclairage incident sur l'échantillon (9) passe à travers un objectif supplémentaire (14) et est détectée par un détecteur (16) différent du détecteur de transmission (13).

6. Dispositif selon la revendication 5, **caractérisé en ce que**
a. l'axe optique de l'objectif supplémentaire (14) est orienté sous un angle de zéro degré par rapport à la direction de propagation du faisceau de lumière d'éclairage incident sur l'échantillon (9), ou **en ce que**
b. l'axe optique de l'objectif supplémentaire (14) est orienté sous un angle de 90 degrés (angle droit) par rapport à la direction de propagation du faisceau de lumière d'éclairage incident sur l'échantillon (9), ou **en ce que**
c. l'axe optique de l'objectif supplémentaire (14) est orienté parallèlement ou coaxialement par rapport à l'axe optique de l'objectif (7).

7. Dispositif selon l'une des revendications 1 à 6, **caractérisé en ce qu'**un détecteur de transmission supplémentaire (21) est disposé de manière recevoir et à détecter la lumière de transmission qui, au lieu de suivre un tracé à travers l'objectif (7) suit un tracé à travers l'objectif supplémentaire (14).

8. Dispositif selon l'une des revendications 1 à 7, **caractérisé en ce que**
a. le moyen de déviation de lumière d'éclairage (8) et/ou le moyen de déviation de lumière de transmission (11) est disposé, notamment mobile, au niveau de l'objectif (7), ou **en ce que** le moyen de déviation de lumière d'éclairage (8) et/ou le moyen de déviation de lumière de transmission (11) est disposé, notamment mobile, au niveau de l'objectif supplémentaire (14), ou **en ce que**
b. le moyen de déviation de lumière d'éclairage (8) et le moyen de déviation de lumière de transmission (11) sont des éléments constitutifs du même dispositif de déviation.

9. Dispositif selon l'une des revendications 1 à 8, **caractérisé en ce que** le dispositif est formé au moins partiellement d'un microscope à balayage ou d'un microscope à balayage confocal.

10. Procédé pour examiner un échantillon (9) au moyen de la tomographie optique par projection, notamment pour faire fonctionner un dispositif selon l'une des revendications 1 à 9, avec lequel un échantillon (9) est éclairé avec un faisceau de lumière d'éclairage (3) et avec lequel un faisceau de lumière de transmission (10), qui contient la lumière du faisceau de lumière d'éclairage (3) transmise à travers l'échantillon (9), est détecté avec un détecteur de transmission (13), le faisceau de lumière d'éclairage (3) et le faisceau de lumière de transmission (10) étant déviés à travers le même objectif (7) avec des directions de propagation opposées, le faisceau de lumière d'éclairage (3) quittant l'objectif (7) avec un décalage latéral par rapport à l'axe optique (19) de l'objectif (7), le faisceau de lumière d'éclairage (3), après être passé à travers l'objectif (7), étant dévié vers l'échantillon avec un moyen de déviation de lumière d'éclairage d'un angle de 90 degrés par rapport à l'axe optique (19) de l'objectif (7), et le faisceau de lumière de transmission(10) en provenance de l'échantillon étant dévié par un moyen de déviation de lumière de transmission (11) de telle sorte qu'après la déviation, il se propage parallèlement à l'axe optique (19) de l'objectif (7).
